# NEUE EUROPÄISCHE PATENTSCHRIFT

(11) **EP 1 511 799 B2**
(45) Veröffentlichungstag und Bekanntmachung des Hinweises auf die Entscheidung über den Einspruch: **19.08.2009**
(45) Hinweis auf die Patenterteilung: 28.09.2005
(21) Anmeldenummer: 03747104.2
(22) Anmeldetag: 22.04.2003
(51) Int. Cl.: C08K 5/00

(54) **THERMOPLASTISCHE POLYURETHANE UMFASSENDE FOLIENFLACHLEITER**
FLAT FILM CONDUCTORS COMPRISING THERMOPLASTIC POLYURETHANE
CONDUCTEURS PLATS EN FEUILLE CONTENANT DES POLYURETHANNES THERMOPLASTIQUES

(30) Priorität: 26.04.2002 DE 10218911
(43) Veröffentlichungstag der Anmeldung: 09.03.2005
(73) Patentinhaber: BASF SE, 67056 Ludwigshafen (DE)
(72) Erfinder: MALZ, Hauke, 49356 Diepholz (DE); HACKL, Christa, 49152 Bad Essen (DE); BERTELS, Alfons, 49356 Diepholz (DE)
(86) Internationale Anmeldenummer: PCT/EP2003/004119
(87) Internationale Veröffentlichungsnummer: WO 2003/091322

(56) Entgegenhaltungen:
- EP-A- 0 381 125
- EP-A- 1 026 206
- JP-A- 2000 081 093
- DATABASE CA [Online] CHEMICAL ABSTRACTS SERVICE, COLUMBUS, OHIO, US; MATSUDA, YUTAKA: "Manufacture of fire-resistant silane-crosslinked polyolefins" retrieved from STN Database accession no. 131:88624 XP002262882 & JPN. KOKAI TOKKYO KOHO, 7 PP. ,
- 'Additives for specialty polymers and products, key products selection guide, (1999-08)' CIBA SPECIALTY CHEMICALS INC. August 1999,

## Beschreibung

Die Erfindung betrifft Folienflachleiter, umfassend thermoplastisches Polyurethan und stabilisiertes thermoplastisches Polyurethan, enthaltend Antioxidantien und Metalldeaktivatoren, bevorzugt zur Verwendung in Folienflachleitern.

Thermoplastisches Polyurethan (nachstehend als TPU bezeichnet) ist ein Elastomer, der in vielen Anwendungen Verwendung findet, z.B. Schuhapplikationen, Folien, Skistiefel, Schläuche. Ein großer Markt für TPU ist die Kabelummantelung. Hierbei werden isolierte Kupferlitzen miteinander verseilt und anschließend mit TPU ummantelt. Als Isoliermaterial für die Kupferlitzen werden die unterschiedlichsten Werkstoffe eingesetzt, z.B. PVC oder EVA. Für einige Anwendungen ist auch TPU für die Isolierung geeignet. Die Ummantelung erfolgt dann meistens wiederum mit TPU.

Auch wenn die breite Anwendung von TPU auf seiner guten chemischen Stabilität besteht, ist es vorteilhaft, das Produkt durch Zugabe von Additiven gegen die Schädigung von Wärme bzw. UV-Licht zusätzlich zu stabilisieren. Gängige Stabilisatoren hierfür sind beispielsweise phenolische Antioxidantien, Hindered Amine Stabilizers, und UV-Absorber, wobei für eine gute UV-Stabilisierung verschiedenen Stabilisatorklassen in Kombination verwendet werden.

Des weiteren ist es oft von Interesse, die Brennbarkeit des TPU zu reduzieren und beispielsweise selbstverlöschende, nicht abtropfende Kabel herzustellen. Gerade in Kabelanwendungen ist deshalb häufig die Einarbeitung von flammenhemmenden Additiven von Bedeutung. Zur Verminderung der Entflammbarkeit werden dem TPU Flammschutzmittel zugegeben. Beispiele für diese flammenhemmenden Additive sind sowohl Verbindungen, die Halogene wie Chlor und Brom enthalten, als auch halogenfreie Flammschutzmittel wie z.B. Phosphorsäureester und Melaminderivate. Die Verwendung halogenfreier Flammschutzmittel ist beschrieben in EP-A-617079 und EP-A-189130. Der Zusatz der Produkte kann sich allerdings auch negativ auf die mechanischen Eigenschaften der erhaltenen TPU-Formmassen auswirken, wie z.B. verminderte Temperatur- und Hitzebeständigkeit vor allem in Anwesenheit verschiedener Metalle, wie beispielsweise Kupfer.

In modernen Automobilen finden immer mehr elektrische Verbraucher und Sensoren Verwendung. Dadurch steigt auch die Zahl der benötigten Elektrokabel. Dies führt zu immer voluminöseren und komplizierteren Kabelbäumen. Die Gewichtszunahme im Automobil durch diese Kabelbäume sowie die Fehleranfälligkeit durch Verwechselung beim Anschluss von Kabeln ist aber unerwünscht. Eine Entwicklung, die diese Nachteile vermeidet, sind die sogenannten Flachleiter oder Folienflachleiter.

Bei dieser neuen Leitergeneration werden mehrere parallel ausgerichtete Kupferbänder mit zwei Folien aus Kunststoff gegeneinander bzw. gegen die Umwelt isoliert. Dadurch einsteht ein flaches flexibles Leiterband, welches sich durch gute Verarbeitung z.B. in Dachhimmeln, geringes Gewicht, kostengünstige Herstellung und einfache Verbindungstechnik auszeichnet.

Aufgrund ihrer Verwendung z.B. im Automobilbau sind bezüglich ihrer mechanischen, chemischen und thermischen Widerstandsfähigkeit an die Folienflachleiter eine ganze Reihe von Anforderungen gestellt. Aufgabe der vorliegenden Erfindung war es daher, ein Polymer bereit zu stellen, das vorteilhaft zur Herstellung von Folienflachleitern verwendet werden kann.

Bauartbedingt ist allerdings bei einem Folienflachleiter die Kontaktfläche zwischen dem Werkstoff Kupfer und dem Werkstoff TPU besonders groß. Zudem ist die Wandstärke sehr gering, so dass eine vom Kupfer ausgehende Destabilisierung des TPUs eine starke Auswirkung hat. Eine weitere Aufgabe der vorliegenden Erfindung war es daher, ein Polymer für die Herstellung von Folienflachleitern bereit zu stellen, das eine hohe Beständigkeit, insbesondere eine hohe Alterungsbeständigkeit, gegenüber Kupfer sowohl bei Wärmezufuhr als auch bei Wasserlagerungen aufweist. Dies gilt insbesondere auch bei Zugabe von Flammschutzmitteln.

Die Aufgaben konnten durch Folienflachleiter, welche aus thermoplastischen Polyurethan, das bevorzugt eine Additivmischung aus einem Antioxidans (Komponente i) und einem Metalldeaktivator (Komponente ii) und gegebenenfalls einem Flammschutzmittel (Komponente iii) enthält, aufgebaut sind, gelöst werden.

Gegenstand der Erfindung sind daher TPU enthaltende Folienflachleiter und stabilisiertes TPU, enthaltend (i) Antioxidantien und (ii) Metalldeaktivatoren sowie die Verwendung des erfindungsgemäßen TPUs zur Herstellung von Folienflachleitern

Ebenfalls ist Gegenstand der Erfindung ein Metalldeaktivatorkonzentrat zur Herstellung von den erfindungsgemäßen thermoplastischen Polyurethanen, enthaltend thermoplastisches Polyurethan und Metalldeaktivatoren (ii) in einer Menge von mehr als 2,5 bis 40 Gew.-%, bezogen auf das Gesamtgewicht des thermoplastischen Polyurethans.

Weiterhin ist ein Gegenstand der Erfindung ein Verfahren zur Herstellung von erfindungsgemäßen Folienflachleitern, durch Bereitstellen von zwei TPU-Folien und anschließend einlaminieren von Metallbändern zwischen die beiden Folien,
oder
durch Coextrusion von TPU-Folien mit Metallbändern.

Gegenstand der Erfindung ist ferner die Verwendung der erfindungsgemäßen Folienflachleitern in Verkehrsmittel, Maschinen und/oder Elektroartikeln, sowie Verkehrsmittel, Maschinen und/oder Elektroartikel, enthaltend die erfindungsgemäßen Folienflachleiter.

Als Antioxidantien, welche die Komponente (i) im erfindungsgemäßen stabilisierten TPU darstellen, sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für Sterisch gehinderte Phenole finden sich in Plastics Additive Handbook, 5th edition, H. Zweifel, ed, Hanser Publishers, München, 2001 ([1]), S. 98-107 und S. 116 - S. 121. Beispiele für Aromatische Amine finden sich in [1] S. 107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung im erfindungsgemäßem Antioxidantiengemisch eignen sich bevorzugt phenolische Antioxidantien.

In einer bevorzugten Ausführungsform weisen die Antioxidantien (i), insbesondere die phenolischen Antioxidantien, eine Molmasse von größer 350 g/mol, besonders bevorzugt von größer 700g/mol und einer maximalen Molmasse < 10000 g/mol bevorzugt < 3000 g/mol auf. Ferner besitzen sie bevorzugt einen Schmelzpunkt von kleiner 180°C, besonders bevorzugt von kleiner 130°C. Weiterhin werden bevorzugt Antioxidantien verwendet, die amorph oder flüssig sind.

Ebenfalls können als Komponente (i) auch Gemische von zwei oder mehr Antioxidantien verwendet werden.

Die vorstehend genannten Randbedingungen bezüglich Molmasse und Schmelzpunkt stellen sicher, dass das Antioxidans sich auch bei großen Oberfläche/Volumen Verhältnissen nicht verflüchtigt und dass bei der Synthese das Antioxidans gleichmäßig und homogen in das TPU eingearbeitet werden kann. Beispiele für geeignete phenolische Antioxidantien sind Moleküle, welche die Struktur 1 als Wirkstoffgruppe enthalten. 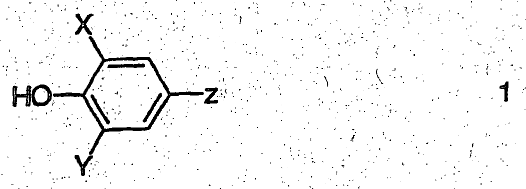 in der X und Y unabhängig voneinander ein Wasserstoffatom, geradkettige, verzweigte oder cyclische Alkylreste mit 1 bis 12 Kohlenstoffatomen bedeuten und

Z eine kovalente Bindung ist, über die die Wirkstoffgruppe mit dem restlichen Molekül des Antioxidans (i) verbunden ist.

Bevorzugt eingesetzt als phenolisches Antioxidans (i) werden solche Verbindungen, die den Rest 2 enthalten. 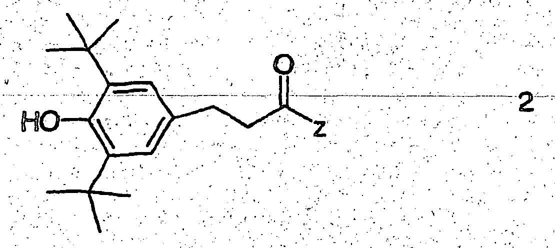 wobei Z wie vorstehend definiert ist.

Beispiele für bevorzugte phenolische Antioxidantien, welche die Wirkstoffgruppe 1 enthalten, sind Triethylenglycol-bis(3-(5-tert.butyl-4-hydroxy-m-tolyl)-propionat) (Irganox® 245, Ciba Spezialitätenchemie AG), Hexamethylen- bis (3-(3,5-di-tert-butyl-4-hydroxyphenyl)propionat) (Irganox® 259), Pentaerythrityltetrakis (3-(3,5-bis(1,1-dimethylethyl)-4-hydroxyphenyl)-propionate) (Irganox® 1010), Octadecyl-3-(3,5-di-tert.butyl-4-hydroxyphenyl)-propionat (Irganox® 1076), N,N'-Hexamethylen-bis-(3,5-di-tert.butyl-4-hydroxy-hydrozimtsäureamid) (Irganox® 1098),

Phenol, 2,4-dimethyl-6-(1-methylpentadecyl)- + Octadecyl-3-(3,5-di-tert.-butyl-4-hydroxy-phenyl)-propionat (Irganox® 1141), , 2-tert-Butyl-6-(3-tert.-butyl-2-hydroxy-5-methylbenzyl)-4-methylphenyl-acrylat (Irganox® 3052), und CAS.Nr. 125643-61-0 (Irganox® 1135).

Besonders bevorzugte phenolische Antioxidantien sind Irganox® 1010, Irganox® 245, Irganox®259 und Antioxidantien auf Basis von Polyetherolen.

Weiter besonders bevorzugt sind Antioxidantien, die sich durch die allgemeinen Formeln 3 A und 3 B beschreiben lassen. 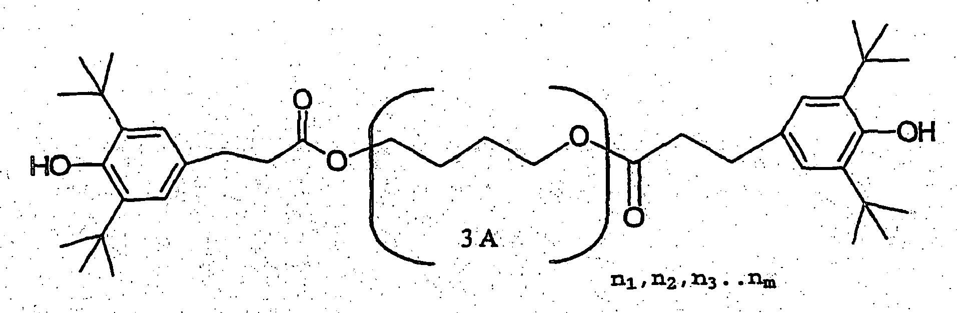 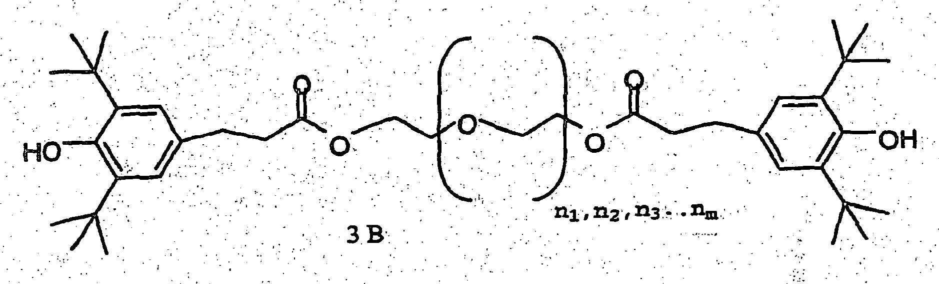 n₁,n₂,n₃..nₘ sind in den Formeln 3 A und 3 B ganze Zahlen > 0 und es gilt die Beziehung, dass n₂ = n₁+1 und n₃ = n₂+1 und nₓ₊₁ = nₓ+1 usw.

Die bevorzugten Antioxidantien 3 A und 3 B stellen dementsprechend Mischungen aus verschiedenen Verbindungen dar, die sich nur in der Größe von n unterscheiden, nachfolgend als Antioxidantienmischung bezeichnet. Der Anteil der Moleküle n₁, n₂,n₃ bis nₘ wird dabei so gewählt, dass die zahlenmittlere Molmasse der Antioxidantienmischung der als vorteilhaft erkannten Molmasse entspricht. Bevorzugt wird der Anteil der Moleküle n₁, n₂, n₃ bis nₘ so gewählt, dass die zahlenmittlere Molmasse des Antioxidantienmischung 3 A und/oder 3 B größer 350 g/mol, besonders bevorzugt > 700 g/mol und < 10000 g/mol bevorzugt < 3000 g/mol beträgt.

In einer weiteren bevorzugten Ausführungsform werden Antioxidantienmischungen verwendet, deren Polydispersität P_{d} größer 1 ist, d.h, ihre zahlenmittlere Molmasse ist kleiner als ihre gewichtsmittlere Molmasse ist. Dies ist beispielsweise dann erfüllt, wenn das Antioxidans aus einer Mischung aus verschiedenen Molekülen der Struktur 3 A oder 3 B mit unterschiedlichen n besteht.

Es kann von Vorteil sein, wenn nicht ein einzelnes phenolisches Antioxidans verwendet wird sondern Mischungen von phenolischen Antioxidantien zur Stabilisierung eingesetzt werden, Prinzipiell können alle phenolischen Antioxidantien, die den oben beschrieben Bedingungen zu Molmasse und Schmelzpunkt entsprechen, für derartige Mischungen eingesetzt werden.

Besonders bevorzugt sind Mischungen, die Irganox® 1010 enthalten und/oder solche Mischungen, die phenolische Antioxidantien gemäß den allgemeinen Formeln 3 A und 3 B enthalten.

Als Komponente (ii) werden Metalldeaktivatoren eingesetzt. Metallionen katalysieren im allgemeinen die Zersetzung von Peroxiden und beschleunigen damit den Abbau von Polymeren, folglich sind Metalldeaktivatoren Substanzen, die den schädlichen Einfluss von Metallionen bezüglich des Abbaus von Polymeren vermindern, z.B. durch Komplexierung dieser Metallionen. Beispiele für Metalldeaktivatoren sind 2-(2-Benzimidazolyl)-phenol, 3-(2-Imidazolin-2-yl)-2-naphthol, 2-(2-Benzooxazolyl)-phenol, 4-Diethylamino-2.2'-dioxy-5-methylazobenzene, 3-Methyl-4-(2-oxy-5-methylphenylazo)-1-phenyl-5-pyrazolone, Decamethylendicarboxy-disalicyloylhydrazide.

Überraschenderweise hat sich aber gezeigt, dass besonders gute Ergebnisse mit Metalldeaktivatoren erreicht werden, die Triazol- und Hydrazinderivaten des Salicylaldehyds sind, z.B. solche Metalldeaktivatoren, die nach der Struktur 4 aufgebaut sind.

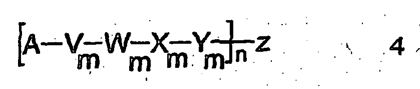

In Struktur 4 ist A ein Salicyladehydrest gemäß Formel 4.2, 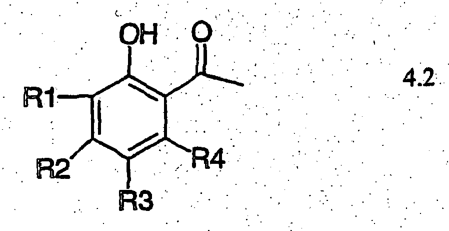 R1-R4 sind unabhängig voneinander ein H, OH, Halogen, NO₂, NH₂, ein C1-C-12 linearer, verzweigter oder cyclischer Alkylrest, ein linearer, verzweigter oder cyclischer C1-C12 Alkenyl, ein linearer, verzweigter oder cyclischer C1-C12 Alkinylrest oder Halogenalkylrest, ein linearer, verzweigter oder cyclischer C1-C12 Alkoxyrest, ein linearer, verzweigter oder cyclischer C1-C12 Alkylaminorest, enthaltend, primäre und/oder sekundäre, und/oder tertiäre Amine, ein linearer, verzweigter oder cyclischer C1-C12 Alkylthiorest, ein linearer, verzweigter oder cyclischer C1-C12 Alkoxycarbonylrest.
- Vₘ: in Formel 4 ist
ein Hydrazinrest gemäß Formel 4.4, 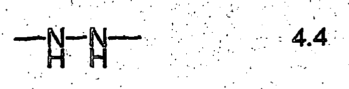 Wₘ, Yₘ in Formel 4 sind unabhängig voneinander nichts, oder eine Carbonylgruppe,

Xₘ ist nichts, ein Wasserstoffatom, C1-C30 linearer oder verzweigter Alkylenrest, ein linearer, verzweigter oder cyclischer C1-C30 Alkenylenrest, ein linearer, verzweigter oder cyclischer C1-C30 Alkinylenrest, ein linearer, verzweigter oder cyclischer C1-C30 Alkoxyrest, ein linearer, verzweigter oder cyclischer C1-C30 Alkylaminorest, enthaltend primäre Aminogruppen. z ist optional und stellt ein Wasserstoffatom, ein Halogenatom, ein Kohlenstoffatom, ein Sauerstoffatom, ein Schwefelatom, ein Stickstoffatom, eine NH_{3-O} Gruppe, ein Phosphoratom, einen Methylrest, einen Methenylrest, einen Methinylrest, ein mono, di, tri-6-valenter Dialkoholradikal, beispielsweise ein Diolrest mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, ein Triolrest, wie 1,2,4-, 1,3,5-Trihydroxy-cyclohexan, Glycerin und Trimethylolpropan oder höherwertige Alkohole, wie Pentaerythrit oder Saccharose, oder ein Aminoalkohol- oder Diaminradikal wie beispielsweise Ethylendiamin, 1,2-Propandiamin, 1,3-Propandiamin, Tetramethylendiamin, 2-Methyl-1,5-diaminopentan, 1-Methyl-2,4-diaminocyclohexan, 1,2-Diaminocyclohexan, 1,3-Diaminocyclohexan, 1,4-Diaminocyclohexan oder Isophorondiamin, dar.

n ist in Formel 4 eine ganze Zahl von 1-6,
m ist eine ganze Zahl von 1-n und
O ist im Ausdruck NH_{3-O} eine ganze Zahl von 1-3.

Beispiele für die bevorzugten obige Strukturen sind Decamethylendicarboxy-disalicyloylhydrazide (ADK Stab CDA 6®) gemäß der Formel 5.

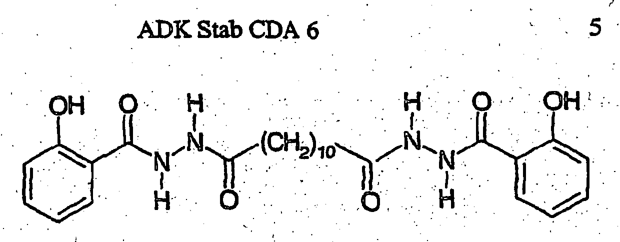

Besonders bevorzugt ist ADK Stab CDA 6.

Die beiden Stabilisierungskomponenten (i) Antioxidans und (ii) Metalldeaktivierungskomponente können in einer Ausführungsform der vorliegenden Erfindung in einem Molekül vereint sein.

Zur Stabilisierung von thermoplastischen Polyurethanen werden die Komponenten (i) bis (ii) und gegebenenfalls (iii) in das Poly-urethan eingebracht.

In einer bevorzugten Ausführungsform enthält das zu stabilisierende Polyurethan im allgemeinen 0,1 bis 5 Gew.-% an Antioxidans (i), bezogen auf das Gesamtgewicht des Polyurethans.

Ist das zu stabilisierende TPU ein Polyether-TPU mit einer Shorehärte kleiner Shore 54 D, wird das Antioxidans (i) üblicherweise in Konzentrationen von 0,1 bis 5 Gewichtsprozent (Gew.-%), bevorzugt 0,1 bis 2 Gew.-%, besonders bevorzugt 0,5 bis 1,5 Gew.-%, bezogen auf das Gesamtgewicht des TPU eingesetzt.

Ist das zu stabilisierende TPU ein Polyester-TPU oder ein Polyether-TPU mit einer Shorehärte größer oder gleich Shore 54 D , wird das Antioxidans (i) üblicherweise in Konzentrationen von 0,1 bis 5 Gew.-%, bevorzugt 0,1 bis 1 Gew.-%, besonders bevorzugt 0,2 bis 0,75 Gew.-%, bezogen auf das Gesamtgewicht des TPU eingesetzt.

Von der Komponente (ii) enthält das erfindungsgemäße, stabilisierte TPU üblicherweise 0,01 Gew.-% - 2,5 Gew.-%, bevorzugt 0,05 - 1 Gew.-%, besonders bevorzugt 0,1 - 0,5 Gew.-%, bezogen auf das Gesamtgewicht des TPU.

Für den Fall, dass die Komponenten (i) und (ii) in Form einer Verbindung zugegeben werden, die beide Komponenten vereint, so wird diese Verbindung im allgemeinen in einer Menge 0,01 Gew.-% - 2,5 Gew.-%, bevorzugt 0,05 - 1 Gew.-%, besonders bevorzugt 0,1 - 0,5 Gew.-%, bezogen auf das Gesamtgewicht des TPU, eingesetzt. Zusätzlich kann dann noch ein Antioxidans (Komponente i) zugegeben werden, damit die Konzentration an der Komponente i) der bevorzugten Ausführungsform entspricht.

In einer bevorzugten Ausführungsform kann zu dem erfindungsgemäß stabilisiertem TPU, enthaltend die Komponenten (i) und (ii), zusätzlich noch Flammschutzmittel als Komponente (iii) zur Reduzierung der Brennbarkeit zugegeben werden.

Als halogenfreie Flammschutzmittel eignen sich neben z.B. Aluminiumtrihydrat, und Magnesiumhydrat für besonders niederschmelzenden TPU's auch die Triester der Phosphorsäure wie Trialkylphosphate oder Triarylphosphate, wie z.B. Triphenylphosphat. Besonders bevorzugt sind oligomere Phosphorsäureester bzw. Phosphonsäureester und auch cyclische Phosphate, die sich vom Pentaerythrit, Neopentylglycol oder vom Brenzkatechin ableiten. Diese Phosphorsäureester können alleine oder in Mischungen untereinander oder in Mischungen mit Phosphonsäureestern eingesetzt werden. Üblicherweise werden jedoch Phosphorsäurester oder Phosphonsäureester eingesetzt.

In einer besonders geeigneten Flammschutzkombination werden die Phosphorsäureester und/oder Phosphonsäureester in Mischungen zusammen mit einem oder mehreren Melaminderivaten für das TPU eingesetzt. Wobei dann das Gewichtsverhältnis von Phosphat und Phosphonat zu Melaminderivat vorzugsweise im Bereich von 5:1 bis 1:5 liegt. Als Melaminderivate kommen dabei vorzugsweise Melamincyanurat, Melaminphosphat, Melaminborat, besonders bevorzugt Melamincyanurat in Frage.

Überraschenderweise hat sich aber gezeigt, dass insbesondere die Verwendung von Melaminderivaten ohne Zusatz von Phosphorsäureestern ein besonders geeignetes TPU für die Herstellung von Folienflachleitern und Kabelummantelungen ergibt, daher ist diese Ausführungsform bevorzugt.

Als halogenhaltige Flammschutzmittel kann eine Vielzahl an chlorierten oder bromierten Verbindungen zum Einsatz gelangen. Wirksame Flammschutzmittel sind z.B. chloriertes Polyethylen, chlorierte Cyclopentadien-Addukte, Decabromdiphenyloxid, Decabromdiphenyl, Poly(tetrabrombisphenol-A-glycidylether), Poly(tetrabrombisphenol-A-carbonat) in Kombination untereinander und/oder mit Antimon-(III)-oxid als Synergist und/oder Zinkborat. Zur Verbesserung der Flammschutzwirkung können dem TPU auch eine Reihe anderer Metalloxiden zugesetzt werden, wie z.B. ZnO, B₂O₃, Fe₂O₃, CaO.

Polytetrafluorethylen und Kieselsäure in sehr geringen Anteilen ist zur Reduzierung der Abtropfneigung geeignet.

Die Mengen der zur Herabsetzung der Entflammbarkeit gegebenenfalls zugesetzten Komponente (iii) variiert stark von der Wahl der Komponente, z.B. ob es sich um einen halogenhaltigen oder einen halogenfreien Flammschutz handelt. Die Additive (iii) der bevorzugten Ausführungsform sind mit ihren eingesetzten Mengen in den Druckschriften EP-A-0617079 und EP-A-0189130 beschrieben.

Die Flammschutzmittel werden im allgemeinen in einer Menge von 0,1 bis 60 Gew.-%, bevorzugt von 1 bis 40 Gew.-% und besonders bevorzugt von 5 bis 25 Gew.-%, bezogen auf das Gesamtgewicht des stabilisierten TPU, dem TPU zugegeben.

In einer besonders bevorzugten Ausführungsform wird als Flammschutzkomponente (iii) Melamincyanurat in einer Menge von 0,1 %-60 Gew.%, besonders, 5 - 40 Gew%, insbesondere 15 - 25 Gew.-% eingesetzt.

Die Komponenten (i), (ii) und gegebenenfalls (iii) können zur Stabilisierung von elastomeren Polyurethan, insbesondere von thermoplastischen Polyurethanen bzw. zur Herstellung von stabilisierten Polyurethanen verwendet werden.

Thermoplastischen Polyurethan bedeutet, dass es sich um ein thermoplastisches Elastomer auf Polyurethanbasis handelt. Ein thermoplastisches Elastomer ist ein Elastomer, das, wenn es in dem für den Werkstoff für Verarbeitung und Anwendung typischen Temperaturbereich wiederholt erwärmt und abgekühlt wird, thermoplastisch bleibt. Unter thermoplastisch wird die Eigenschaft eines Kunststoffes verstanden, in einem für ihn typischen Temperaturbereich wiederholt in der Wärme zu erweichen und beim Abkühlen z u erhärten und im erweichten Zustand wiederholt durch Fließen als Formteil, Extrudat oder Umformteil zu Halbzeug oder Gegenständen formbar zu sein.

Verfahren zur Herstellung von thermoplastischen Polyurethanen sind allgemein bekannt. Im allgemeinen werden TPUs, durch Umsetzung von (a) Isocyanaten mit (b) gegenüber Isocyanaten reaktiven Verbindungen mit einem Molekulargewicht (M_{w}) von 500 bis 10000 und (c) Kettenverlängerungsmitteln mit einem Molekulargewicht von 50 bis 499 gegebenenfalls in Gegenwart von (d) Katalysatoren und/oder (e) üblichen Zusatzstoffen herstellt werden.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylendiisocyanat-1,4, Pentamethylen-diisocyanat-1,5, Butylendiisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis weniger als 3000, und bevorzugt einer mittleren Funktionalität von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.
   Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meg/g, bevorzugt kleiner als 0,01 meg/g, verstanden.
   Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.
   Weiterhin können Polybutadiendiole mit einer Molmasse von 500 - 10000 g/mol bevorzugt 1000-5000 g/mol, insbesondere 2000 - 3000 g/mol verwendet werden. TPU's welche unter der Verwendung dieser Polyole hergestellt wurden, können nach thermoplastischer Verarbeitung strahlenvernetzt werden. Dies führt z.B. zu einem besseren Abbrennverhalten.
   Statt eines Polyols können auch Mischungen verschiedener Polyole eingesetzt werden.
c) Als Kettenverlängerungsmittel (c) werden allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
   Besonders bevorzugt handelt es sich bei den Komponenten a) bis c) um difunktionelle Verbindungen, d.h. Diisocyanate (a), difunktionelle Polyole, bevorzugt Polyetherole (b) und difunktionelle Kettenverlängerungsmittel, bevorzugt Diole.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Keimbildungsmittel, Gleit- und Entformungshilfen, Farbstoffe und Pigmente, gegebenenfalls weitere Antioxidantien, die zusätzlich zur Komponente (i) eingesetzt werden können, z.B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymers und niedermolekulare Carbodiimide.

Neben den genannten Komponenten a), b) und c) und gegebenenfalls d) und e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente c).

Alle in dieser Schrift genannten Molekulargewichte weisen die Einheit [g/mol] auf.

Zur Einstellung von Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach One-shot oder dem Prepolymerverfahren, oder diskontinuierlich nach dem bekannten Prepolymerprozess erfolgen. Bei diesen Verfahren können die zur Reaktion kommenden Komponenten (a), (b), (c) und gegebenenfalls (d) und/oder (e) nacheinander oder gleichzeitig miteinander vermischt werden, wobei die Reaktion unmittelbar einsetzt.

Beim Extruderverfahren werden die Aufbaukomponenten (a), (b), (c) sowie gegebenenfalls (d) und/oder (e) einzeln oder als Gemisch in den Extruder eingeführt, z.B. bei Temperaturen von 100 bis 280°C, vorzugsweise 140 bis 250°C, und zur Reaktion gebracht. Das erhaltene TPU wird extrudiert, abgekühlt und granuliert.

Nach der Synthese kann es das TPU gegebenenfalls durch Konfektionierung auf einem Extruder modifiziert werden. Durch diese Konfektionierung kann das TPU z.B. in seinem Schmelzindex oder seiner Granulatform entsprechend den Anforderungen modifiziert werden.

Die Komponenten (i) - (iii) können während der Synthese oder der Verarbeitung des TPU zudosiert werden. Es können auch Konzentrate, welche die Komponenten i) und/ oder (ii) und/ oder (iii) enthalten, hergestellt werden und während der Verarbeitung zum TPU zudosiert werden.

Bevorzugt ist der Fall, in dem das TPU während der Synthese oder Konfektionierung mit Komponente i) und gegebenenfalls Komponente iii) stabilisiert wird und während der Verarbeitung dem TPU ein Konzentrat der Komponente ii) zudosiert wird.

Ein derartiges, erfindungsgemäßes Metalldeaktivatorkonzentrat enthält im allgemeinen ein TPU, bevorzugt ein Polyether-TPU, und mehr als 2,5 bis 40 Gew.-%, bevorzugt 3 bis 20 Gew.-%, besonders bevorzugt 4 bis 10 Gew.-% an Metalldeaktivator (ii), bezogen auf das Gesamtgewicht des thermoplastischen Polyurethans. Zusätzlich kann das Konzentrat gegebenenfalls auch ein Antioxidans, bevorzugt ein phenolisches Antioxidans, üblicherweise in einer Menge von 0.1 bis 5 Gew.-%, bevorzugt von 0,5 bis 2 Gew.-% enthalten.

Das erfindungsgemäße Konzentrat kann hergestellt werden, indem der Metalldeaktivator (ii) und gegebenenfalls das Antioxidans (i) dem TPU bei der Synthese zugegeben wird, oder ein TPU in einem Batchkneter oder auf einem Extruder aufgeschmolzen wird und der Metalldeaktivator und gegebenenfalls das Antioxidans dem TPU bei der Synthese zugegeben wird. Bevorzugt ist die Zugabe auf einem Extruder, insbesondere einem Zweiwellenextruder.

Die Menge an diesem Konzentrat wird dabei bevorzugt so gewählt, dass die Konzentration der Komponente ii) im so ausgerüsteten TPU der besonders bevorzugten Konzentration für die Komponente ii) im TPU entspricht. Bevorzugt sind solche Konzentrate, die dem TPU zu 0.5 - 10 Gew% bevorzugt 1 - 4 Gew% bezogen auf die Gesamtmenge TPU zudosiert werden.

Die Verarbeitung der erfindungsgemäß hergestellten TPUs, die üblicherweise als Granulat oder in Pulverform vorliegen, zu Spritzguss- und Extrusionsartikeln, z.B. den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion. Derartige Spritzguss und Extrusionsartikel können auch aus Compounds, enthaltend das erfindungsgemäße TPU und mindestens einem weiteren thermoplastischen Kunststoff, besonders einem Polyolefin, Polyester, Polyether, Polystyrol oder Styrolcopolymer, Polyoxymethylen, bestehen. Insbesondere lässt sich das erfindungsgemäß hergestellte TPU zur Herstellung von Folienflachleitern und zur Ummantelung von Kupferkabeln verwenden.

Unter Folienflachleiter werden im allgemeinen flache, flexible Leiterbänder verstanden, die aus einem oder mehreren, bevorzugt parallel ausgerichteten, Metallbändern, die zwischen zwei Folien aus Kunststoff eingearbeitet werden, aufgebaut sind, so dass eine Isolierung erfolgt. Die Ausmaße der Folienflachleiter sind nicht begrenzt. Üblicherweise weisen sie je nach Verwendung eine Länge von 5 cm bis 100 m und eine Breite von 0,5 cm bis 30 cm auf.

Gemäß der vorliegenden Erfindung enthalten die Kunststofffolien thermoplastisches Polyurethan. Bevorzugt bestehen sie aus thermoplastischem Polyurethan, besonders bevorzugt aus dem erfindungsgemäß stabilisiertem TPU. Die Folien weisen im allgemeinen eine Dicke von 1 µm bis 5 mm, bevorzugt von 10 µm bis 1 mm, besonders bevorzugt von 25 µm bis 250 µm auf. Die Haftung zwischen den Folien wird üblicherweise durch Erwärmen und Verpressen und/oder durch die Verwendung von Klebstoffen erzielt.

Als Metallband ist im allgemeinen jeder leitende Stoff geeignet. Bevorzugt werden aber Metalle, wie beispielsweise Eisen, Zink, Kupfer oder Legierungen davon verwendet, besonders bevorzugt wird Kupfer verwendet. Die Metallbänder weisen im allgemeinen eine Dicke von 1 µm bis 500 µm, bevorzugt von 10 µm bis 250 µm und besonders bevorzugt von 30 µm bis 100 µm auf.

Zur Herstellung der erfindungsgemäßen Folienflachleiter sind mehrere Verfahren möglich. In einer bevorzugten Ausführungsform werden zunächst zwei, bevorzugt einseitig mit Klebstoff bestrichenen TPU-Folien bereit gestellt. Zwischen diese beiden Folien werden anschließend Metallbänder, beispielsweise 30 - 100 µm dicke Kupferbändchen, eingearbeitet bzw. einlaminiert. Als Klebstoff ist ein widerstandsfähiger Kleber bevorzugt.

In einer weiteren bevorzugten Ausführungsform wird der Folienverbund in einem Arbeitsschritt, durch Coextrusion der TPU-Folien mit den Metallbändern, bevorzugt mit den Kupferbändchen, hergestellt werden. Hierbei entfällt der zusätzliche Verarbeitungsschritt des Laminierens.

Weiterhin ist es möglich, die erfindungsgemäßen Folienflachleiter durch eindrucken der Kupferleitung in die TPU-Folie herzustellen.

Die erfindungsgemäßen Folienflachleiter können vielseitig eingesetzt werden. Bevorzugt werden sie als flexible Leiter in Verkehrsmittel, Elektroartikeln und Maschinen verwendet. Beispiele für geeignete Verkehrsmittel sind Kraftfahrzeuge, beispielsweise PKWs oder LKWs, Schienenfahrzeuge, Flugzeuge oder Schiffe. Beispiele für Elektroartikel sind Haushaltsgeräte, Fernseher, Stereoanlagen, Videorekorder, Computer und Zubehör, Drucker und Zubehör, Kopierer und Zubehör, Scanner und Zubehör, Schaltschränke und Steueranlagen. Beispiele für Maschinen sind Verpackungsmaschinen, Roboter, spanabhebende Maschinen, Werkzeugmaschinen, Spritzgussmaschinen, Extruder, Kalander, Folienblasmaschinen, CAD-Maschinen, Fräsen, Stanzen, Pressen, Drehmaschinen, Baumaschinen, z.B. Bagger, Radlader, Kräne, Förderanlagen, Flurförderfahrzeuge, Sortiermaschinen, Fließbänder, Prozessüberwachungsanlagen, und Prozessleitstände.

Die folgenden Beispiele sollen die vorliegende Erfindung verdeutlichen.

### Beispiel 1

Beispiel 1 beschreibt die Herstellung eines erfindungsgemäßen stabilisierten TPUs im Handgussverfahren.

Zur Simulation der großen Oberfläche, wie sie in Folienflachleitern existieren, wurde Kupferpulver direkt mit eingearbeitet.

1000 g eines Polytetrahydrofuran mit einer Molmasse von 1000 g/mol (PTHF 1000) wurden in einem Weißblecheimer auf ca. 90°C erwärmt. Anschließend erfolgte unter Rühren die Zugabe von Antioxidans (Komponente i; Mengen siehe Tabelle 1) sowie von 125 g Butandiol. Zusätzlich wurden die in Tabelle 1 angegebenen Mengen Cu- Pulver (Korngröße 0,04 mm) und Metalldeaktivator (ii) zudosiert. Die Lösung wurde unter Rühren auf 80°C erwärmt. Anschließend wurden 600 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

**Tabelle 1**

| Versuchsnummer | Antioxidans 1 | Menge | Antioxidans 2 | Menge | Metalldeaktivator | Menge | Cu |
|---|---|---|---|---|---|---|---|
| vergl. 1.1 | Irganox® 1010 | 8g | Irganox® 1098 | 8g | ADK Stab® CDA 1 | 1,75 g | 5.2 g |
| 1.2 | Irganox® 1010 | 8g | Irganox® 1098 | 8g | ADK Stab® CDA 6 | 1,75 g | 5.2 g |
| vergl. 1.3 | Irganox® 1010 | 8g | Irganox® 1098 | 8g | Irganox® MD 1024 | 1,75 g | 5.2 g |
| vergl. 1.4 | Irganox® 1010 | 8g | Irganox® 1098 | 8g | Eastman® Inhibitor | 1,75 g | 5.2 g |
| vergl. 1.5 | Irganox® 1010 | 8g | Irganox® 1098 | 8g | Palmarole® MDA P10 | 1,75 g | 5.2 g |
| 1.6 | Irganox® 1010 | 8g | Irganox® 1098 | 8g | Palmarole® MDA P11 | 1,75 g | 5.2 g |
| 1.7 | Irganox® 1010 | 8g | Irganox® 1098 | 8g | Hostanox® OSP 1 | 1,75 g | 5.2 g |
| 1.8 | Irganox 1010 | 8g | Irganox 1098 | 8g | - | - | 5,2 g |
| Irganox® und Tinuvin® sind Handelsnamen der Ciba Spezialitätenchemie GmbH, Lampertsheim, Deutschland ADK® Stab und Palmarole® MDA sind Handelsnamen der Asahi Denka Kogyo K.K., Tokyo, Japan. Eastman Inhibitor® ist ein Handelsname der Eastman Chemical Company, Kingsport, TN, USA Hostanox® ist ein Handelsname der Clariant GmbH, Deutschland. | | | | | | | |

### Beispiel 2

Beispiel 2 beschreibt die Herstellung von Prüfplatten und die Alterungstests

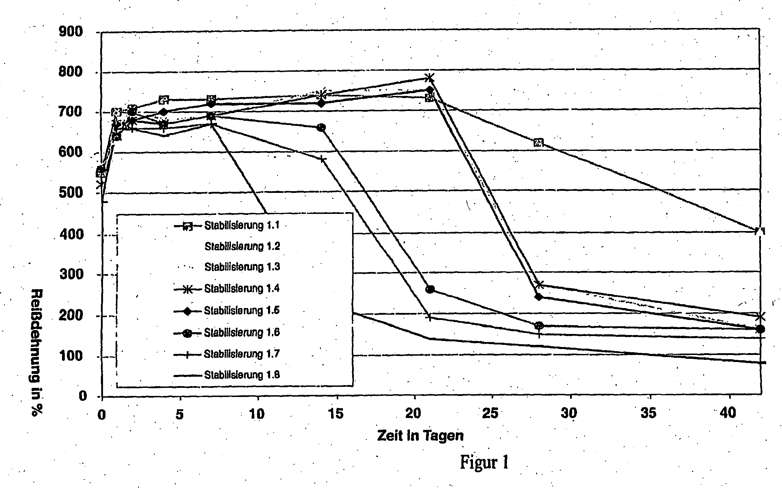

Die Gießschwarten aus Beispiel 1 wurden granuliert und zu 2 mm dicken Spritzplatten verspritzt. Aus diesen Spritzplatten wurden S 2 Prüfkörper ausgestanzt. Diese Prüfkörper wurden in einem Heizschrank bei 130°C gealtert. In vordefinierten Intervallen wurden die Prüfkörper dem Heizschrank entnommen und nach DIN 53504 getestet. Figur 1 zeigt den Verlauf der Reißdehnung bei den Proben gemäß den Beispielen 1.1 bis 1.8. Es ist deutlich zu erkennen, dass die Zugabe von Metalldeaktivatoren die Stabilität des TPU verbessert. Außerdem zeigt sich, dass die bevorzugten Metalldeaktivatoren aus Versuch 1.1 und 1.2 besonders gute Wirkung zeigen.

### Beispiel 3

Beispiel 3 beschreibt die Herstellung eines Metalldeaktivatorkonzentrates

1000 g PTHF 1000 wurden in einem Weißblecheimer auf ca. 90°C erwärmt. Anschließend erfolgte unter Rühren die Zugabe von 8 g Irganox® 1010 und 8 g Irganox® 1098 sowie von 125 g Butandiol. Zusätzlich wurden 50 g ADK Stab CDA 1® (Versuch 3.1) bzw. 50 g ADK Stab CDA 6® (Versuch 3.2) zudosiert. Die Lösung wurde unter Rühren auf 80°C erwärmt. Anschließend wurden 600 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

### Beispiel 4

Beispiel 4 beschreibt die Herstellung einer TPU- Folie mit Hilfe eines Metalldeaktivatorkonzentrates.

Verschiedene Polyether-TPU der Elastollan®-Reihe wurden mit 4 % eines Konzentrates aus Beispiel 3 versetzt, die Granulate gut vermischt und dann auf einer Dr. Collin Cill-Roll- Anlage 136-350 und Breitschlitzdüse 250 mm gefahren. Versuche, bei denen nicht das erfindungsgemäße stabilisierte TPU verwendet wurde, sind mit "V" gekennzeichnet. Es wurde eine Folienstärke von 50 µm eingestellt. Beide in Beispiel 3 aufgeführten Konzentrate ließen sich gut einarbeiten. Tabelle 2 gibt Auskunft über die durchgeführten Versuche.

**Tabelle 2**

| Versuch | TPU | Komponente (i) | Menge | Konzentrat | Menge | Komponente (iii) |
|---|---|---|---|---|---|---|
| V 4.1 | 1154 D | Irganox® 1125 | 0,5 Gew.-% | - | - | - |
| V 4.2 | 1154 D | Irganox® 1125 | 0,5 Gew.-% | 3.1 | 4 Gew.-% | - |
| 4.3 | 1154 D | Irganox® 1125 | 0,5 Gew.-% | 3.2 | 4 Gew.-% | - |
| V 4.4 | 1185 A | Irganox® 1125 | 1 Gew.-% | - | - | - |
| V 4.5 | 1185 A | Irganox® 1125 | 1 Gew.-% | 3.1 | 4 Gew.-% | - |
| 4.6 | 1185 A | Irganox® 1125 | 1 Gew.-% | 3.2 | 4 Gew.-% | - |
| V 4.7 | 1154D FHF | Irganox® 1125 | 0,5 Gew.-% | - | - | ja |
| V 4.8 | 11 54 D FHF | Irganox® 1125 | 0,5 Gew.-% | 3.1 | 4 Gew.-% | ja |
| 4.9 | 1154 D FHF | Irganox® 1125 | 0,5 Gew.-% | 3.2 | 4 Gew.-% | ja |
| V 4.10 | 1185 A FHF | Irganox® 1125 | 1 Gew.-% | - | - | ja |
| V 4.11 | 1185 A FHF | Irganox® 1125 | 1 Gew.-% | 3.1 | 4 Gew.-% | ja |
| 4.12 | 1185 A FHF | Irganox® 1125 | 1 Gew.-% | 3.2 | 4 Gew.-% | ja |
| Elastollan® ist ein Handelsname der Elastogran GmbH, Lemförde, Deutschland. | | | | | | |

### Beispiel 5

### Herstellung von Folienflachleitern

Folien, deren Herstellung in Beispiel 4 beschrieben wurde, wurden zwischen zwei Cu-Bleche gepresst und bei 110°C in einem Heizschrank getempert. Nach 250 h wurden die Folien entnommen. Aus Tabelle 3 geht hervor, wie stark sich die einzelnen Folien verfärbt haben.

**Tabelle 3**

| Versuch | TPU Folie | Verfärbung |
|---|---|---|
| V 5.1 | 4.1 | Stark vergilbt |
| V 5.2 | 4.2 | Leicht vergilbt |
| 5.3 | 4.3 | Leicht vergilbt |
| V 5.4 | 4.4 | Stark vergilbt |
| V 5.5 | 4.5 | Leicht vergilbt |
| 5.6 | 4.6 | Leicht vergilbt |
| V 5.7 | 4.7 | Stark vergilbt |
| V 5.8 | 4.8 | Leicht vergilbt |
| 5.9 | 4.9 | Leicht vergilbt |
| V 5.10 | 4.10 | Stark vergilbt |
| V 5.11 | 4.11 | Leicht vergilbt |
| 5.12 | 4.12 | Leicht vergilbt |

Es ist deutlich zu erkennen, dass die Folien aus den Beispielen, welche keinen Metalldeaktivator enthalten, stärker vergilbt sind.

## Patentansprüche

1. Stabilisiertes thermoplastisches Polyurethan, enthaltend
(i) phenolische Antioxidantien und
(ii) Metalldeaktivatoren, ausgewählt aus 2-(2-Benzimidazolyl)-phenol, 3-(2-Imidazolin-2-yl)-2-naphthol, 2-(2-Benzooxazolyl)-phenol, 4-Diethylamino-2,2'-dioxy-5-methylazobenzene, 3-Methyl-4-(2-oxy-5-methylphenylazo)-1-phenyl-5-pyrazolone, Decamethylendicarboxy-disalicyloylhydrazide, und Hydrazinderivaten des Salicylaldehyds.

2. Thermoplastisches Polyurethan gemäß Anspruch 1, **dadurch gekennzeichnet, dass** es (i) Antioxidantien in einer Menge von 0,1 bis 5 Gew.-% und (ii) Metalldeaktivatoren in einer Menge von 0,01 bis 2,5 Gew.-%, bezogen auf das Gesamtgewicht des TPUs, enthält.

3. Thermoplastisches Polyurethan gemäß Anspruch 1 oder 2, **dadurch gekennzeichnet, dass** es zusätzlich noch
(iii) Flammschutzmittel
enthält.

4. Metalldeaktivatorkonzentrat zur Herstellung von thermoplastischen Polyurethanen gemäß einem der Ansprüche 1 bis 3, enthaltend thermoplastisches Polyurethan und Metalldeaktivatoren (ii) in einer Menge von mehr als 2,5 bis 40 Gew.-%, bezogen auf das Gesamtgewicht des thermoplastischen Polyurethans.

5. Verwendung der thermoplastischen Polyurethane gemäß Anspruch 1 bis 3 zur Herstellung von Folien, Rollen, Fasern, Verkleidungen in Automobilen, Schläuchen, Kabelsteckern, Faltenbälgen, Schleppkabeln, Kabelummantelungen, Dichtungen, Riemen und/oder Folienflachleitern.

6. Folienflachleiter, umfassend thermoplastisches Polyurethan.

7. Folienflachleiter gemäß Anspruch 6, **dadurch gekennzeichnet, dass** dieser stabilisiertes thermoplastisches Polyurethan umfasst, enthaltend (i) Antioxidanten und (ii) Metalldeaktivatoren.

8. Folienflachleiter gemäß Anspruch 6 oder 7, **dadurch gekennzeichnet, dass** dieser aufgebaut ist aus zwei aneinander haftenden Folien aus thermoplastischen Polyurethan oder stabilisiertem thermoplastischen Polyurethan gemäß einem der Ansprüche 1 bis 3, wobei zwischen den Folien ein Metallband oder mehrere Metallbänder mit einer Dicke von 1 bis 500 µm einlaminiert sind.

9. Verfahren zur Herstellung von Folienflachleitern gemäß einem der Ansprüche 6 bis 8, durch Bereitstellen von zwei TPU-Folien und anschließend einarbeiten von Metallbändern zwischen die beiden Folien,
oder
durch Coextrusion von TPU-Folien mit Metallbändern.

10. Verwendung der Folienflachleiter gemäß einem der Ansprüche 6 bis 8 zum Einsatz in Verkehrsmittel, Elektrogeräten und Maschinen.

11. Elektrogeräte, Maschinen und/oder Verkehrsmittel, enthaltend Folienflaschleiter gemäß einem der Ansprüche 6 bis 8.

## Claims

1. A stabilized thermoplastic polyurethane comprising
(i) phenolic antioxidants and
(ii) metal deactivators selected from 2-(2-benzimidazolyl)phenol, 3-(2-imidazolin-2-yl)-2-naphthol, 2-(2-benzoxazolyl)phenol, 4-diethylamino-2,2'-dioxy-5-methylazobenzenes, 3-methyl-4-(2-oxy-5-methylphenylazo)-1-phenyl-5-pyrazolones, decamethylenedicarboxy-disalicyloylhydrazides and hydrazine derivatives of salicylaldehyde.

2. The thermoplastic polyurethane according to claim 1, comprising (i) antioxidants in an amount of from 0.1 to 5% by weight and (ii) metal deactivators in an amount of from 0.01 to 2.5% by weight, based on the total weight of the TPU.

3. The thermoplastic polyurethane according to claim 1 or 2, additionally comprising
(iii) flameproofing agents.

4. A metal deactivator concentrate for the preparation of a thermoplastic polyurethane according to any of claims 1 to 3, comprising thermoplastic polyurethane and metal deactivators (ii) in an amount of from more than 2.5 to 40% by weight, based on the total weight of the thermoplastic polyurethane.

5. The use of thermoplastic polyurethanes according to any of claims 1 to 3 for the production of films, rollers, fibers, claddings in automobiles, hoses, cable connectors, bellows, trailing cables, cable sheaths, seals, belts and/or film-laminated flat conductors.

6. A film-laminated flat conductor comprising thermoplastic polyurethane.

7. The film-laminated flat conductor according to claim 6, which comprises stabilized thermoplastic polyurethane comprising (i) antioxidants and (ii) metal deactivators.

8. The film-laminated flat conductor according to claim 6 or 7, which is composed of two films of thermoplastic polyurethane or stabilized thermoplastic polyurethane according to any of claims 1 to 3 adhering to one another, a metal strip or a plurality of metal strips having a thickness of from 1 to 500 µm being laminated between the films.

9. A process for the production of a film-laminated flat conductor according to any of claims 6 to 8 by providing two TPU films and then incorporating metal strips between the two films or by coextruding TPU films with metal strips.

10. The use of a film-laminated flat conductor according to any of claims 6 to 8 in means of transport, electrical apparatuses and machines.

11. An electrical apparatus, machine and/or means of transport comprising a film-laminated flat conductor according to any of claims 6 to 8.

## Revendications

1. Polyuréthanne thermoplastique stabilisé, contenant
(i) des antioxydants phénoliques, et
(ii) des désactivateurs de métal, choisis parmi du 2-(2-benzimidazolyl)-phénol, du 3-(2-imidazolin-2-yl)-2-naphtol, du 2-(2-benzooxazolyl)-phénol, du 4-diéthylamino-2,2'-dioxy-5-méthylazobenzène, de la 3-méthyl-4-(2-oxy-5-méthylphénylazo)-1-phényl-5-pyrazolone, du décaméthylènedicarboxy-disalicycloyl-hydrazide et des dérivés d'hydrazine de l'aldéhyde salicylique.

2. Polyuréthanne thermoplastique suivant la revendication 1, **caractérisé en ce qu'**il contient (i) des antioxydants en une quantité de 0,1 à 5 % en poids et (ii) des désactivateurs de métal en une quantité de 0,01 à 2,5 % en poids, par rapport au poids total du TPU.

3. Polyuréthanne thermoplastique suivant la revendication 1 ou 2, **caractérisé en ce qu'**il contient encore en supplément
(iii) un agent ignifuge.

4. Concentré de désactivateur de métal pour la préparation de polyuréthannes thermoplastiques suivant l'une des revendications 1 à 3, contenant du polyuréthanne thermoplastique et des désactivateurs de métal (ii) en une quantité de plus de 2,5 à 40 % en poids, par rapport au poids total du polyuréthanne thermoplastique.

5. Utilisation des polyuréthannes thermoplastiques suivant l'une des revendications 1 à 3 pour la préparation de feuilles, de rouleaux, de fibres, d'habillages d'automobiles, de tuyaux, de prises mâles de câbles, de soufflets, de câbles d'enrouleurs, de gaines de câbles, d'organes d'étanchéité, de courroies et/ou de conducteurs plats en forme de feuilles.

6. Conducteur plat en forme de feuille, comportant du polyuréthanne thermoplastique.

7. Conducteur plat en forme de feuille suivant la revendication 6, **caractérisé en ce que** celui-ci comprend du polyuréthanne thermoplastique stabilisé contenant (i) des antioxydants et (ii) des désactivateurs de métal.

8. Conducteur plat en forme de feuille suivant la revendication 6 ou 7, **caractérisé en ce que** celui-ci est constitué de deux feuilles adhérant l'une à l'autre à base de polyuréthanne thermoplastique ou de polyuréthanne thermoplastique stabilisé suivant l'une des revendications 1 à 3, une ou plusieurs bandes métalliques d'une épaisseur de 1 à 500 µm étant laminées entre les feuilles.

9. Procédé de préparation de conducteurs plats en forme de feuilles suivant l'une des revendications 6 à 8, par réalisation de deux feuilles en TPU et ensuite incorporation de bandes métalliques entre les deux feuilles,
ou
par coextrusion des feuilles de TPU avec des bandes métalliques.

10. Utilisation des conducteurs plats en forme de feuilles suivant l'une des revendications 6 à 8, pour la mise en oeuvre dans des moyens de communication, des appareils électroménagers et des machines.

11. Appareils électroménagers, machines et/ou moyens de communication, contenant des conducteurs plats en forme de feuilles suivant l'une des revendications 6 à 8.
